# EUROPEAN PATENT APPLICATION

(11) **EP 4 755 743 A1**
(43) Date of publication of application: **10.06.2026**
(21) Application number: 24848721.7
(22) Date of filing: 20.06.2024
(51) Int. Cl.: B60W 30/10

(54) **VEHICLE MOTION CONTROL DEVICE**

(30) Priority: 02.08.2023 JP 2023126581
(71) Applicant: Astemo, Ltd., Chiyoda-ku, Tokyo 1000004 (JP)
(72) Inventor: NASU, Shingo, Tokyo 100-8280 (JP); UENO, Kentarou, Hitachinaka-shi, Ibaraki 312-8503 (JP)
(74) Representative: Strehl & Partner mbB
(86) International application number: PCT/JP2024/022448
(87) International publication number: WO 2025/028060

(57) **Abstract**

A vehicle motion control device is provided with an information acquisition unit that acquires a plurality of pieces of environment information relating to surrounding environment of a subject vehicle, a limit value setting unit that calculates the plurality of limit values for physical quantities relating to motion of the subject vehicle on the basis of the plurality of pieces of environment information, and sets, on a map, a final limit value determined on the basis of the plurality of limit values, and a trajectory planning unit that generates a travel trajectory of the subject vehicle on the basis of the final limit value.

## Description

### Technical Field

The present invention relates to a vehicle motion control device.

### Background Art

As one type of vehicle motion control technologies represented by driver assistance and autonomous driving, a technology that generates a travel trajectory consisting of information about a travel route, a travel speed, etc. as travel targets of a vehicle, and controls a power train, a brake, and steering to allow the vehicle to travel along the travel trajectory is known. A simplest travel speed control includes, for example, a speed maintaining control that maintains a set travel speed.

As an advanced speed control technology, for example, Patent Literature 1 described below discloses a trajectory planning method in which, in a trajectory plan of a subject vehicle, a travel time to be used or a travel distance is considered using nodes, and on the basis of a routing algorithm that selects a minimum cost route, traveling is allowed on the travel route within a constraint, which provides comfort for an occupant.

### Citation List

### Patent Literature

Patent Literature 1: Japanese Unexamined Patent Application Publication (Translation of PCT Application) No.2019-510674

### Summary of Invention

### Technical Problem

In the trajectory planning method described in Patent Literature 1, on the basis of a certain limit value that is set on a sub route, a travel speed is determined. When an attempt is made to travel on a road with an obstacle with this method, a trajectory for traveling at a low travel speed also on a location away from the obstacle is generated in obstacle avoidance. In this method, the speed may become low unnecessarily, and this may decrease ride comfort of an occupant. For addressing this disadvantage, an object of the present invention is to provide a vehicle motion control device in which, to ensure safety and comfort of an occupant simultaneously, generation of a trajectory plan is achieved on the basis of a plurality of limit values calculated based on environment information for travel and travel information about a subject vehicle.

### Solution to Problem

The vehicle motion control device is provided with an information acquisition unit that acquires a plurality of pieces of environment information relating to surrounding environment of a subject vehicle, a limit value setting unit that calculates the plurality of limit values for physical quantities relating to motion of the subject vehicle on the basis of the plurality of pieces of environment information, and sets, on a map, a final limit value determined on the basis of the plurality of limit values, and a trajectory planning unit that generates a travel trajectory of the subject vehicle on the basis of the final limit value. Advantageous Effects of Invention

According to the present invention, a vehicle motion control device capable of achieving generation of a trajectory plan on the basis of the plurality of limit values calculated on the basis of environment information for travel and travel information about a subject vehicle is capable of being provided.

### Brief Description of Drawings

FIG. 1 is a functional block diagram of an in-vehicle system of First Embodiment.
FIG. 2 is a functional block diagram of a travel trajectory planning unit of First Embodiment.
FIG. 3 is a flowchart showing processing of the travel trajectory planning unit of First Embodiment.
FIG. 4A is a processing example of a functional block of the travel trajectory planning unit of First Embodiment.
FIG. 4B is a first variation of the functional block of the travel trajectory planning unit of First Embodiment.
FIG. 4C is a first variation of the functional block of the travel trajectory planning unit of Second Embodiment.
FIG. 5 is a flowchart showing processing of the travel trajectory planning unit of Second Embodiment.
FIG. 6 is a functional block diagram of the travel trajectory planning unit of Third Embodiment.

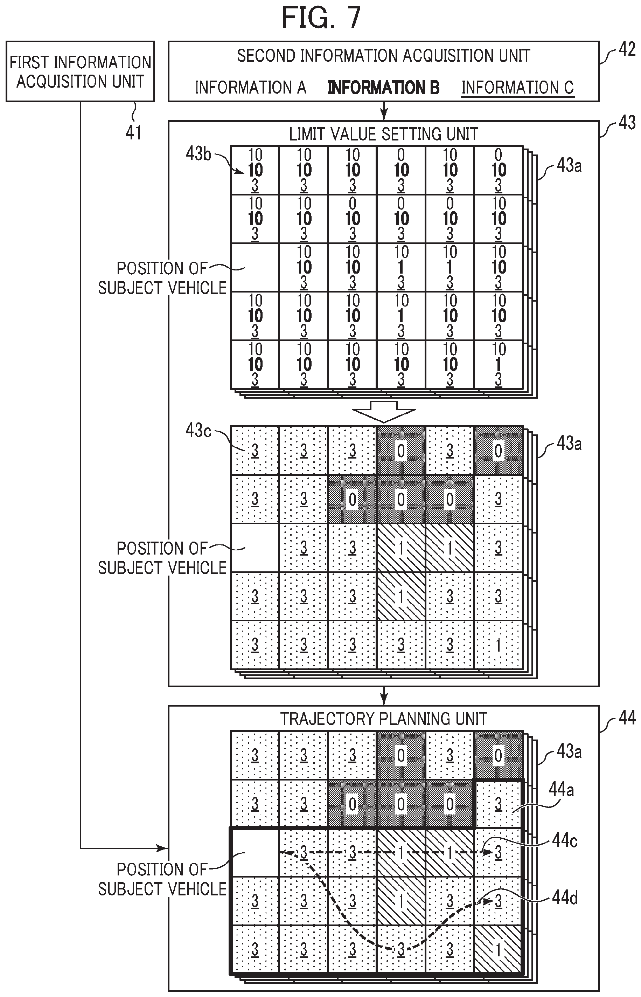

FIG. 7 is a processing example of a functional block of the travel trajectory planning unit of Third Embodiment. Description of Embodiments

Hereinafter, embodiments of the present invention are explained in reference to the drawings. The following description and drawings are exemplifications for explaining the present invention, in which omission and simplification are appropriately made for clear explanation. The present invention is implementable also in other various embodiments. Unless otherwise specified, each component may be singular or plural.

Positions, sizes, shapes, ranges, etc. shown in the drawings may not indicate actual ones for easy understanding of the invention. Thus, the present invention is not limited to the sizes, the shapes, the ranges, etc. disclosed in the drawings.

### (First Embodiment and Total Configuration)

### (Fig. 1)

An in-vehicle system 1 is a system mounted on a subject vehicle to execute vehicle motion control such as driver assistance and autonomous driving. The in-vehicle system 1 includes an extra-vehicle communication device 11, a GNSS (Global Navigation Satellite System) 12, a map information storage unit 13, a sensor 14, an HMI (Human Machine Interface) unit 15, a vehicle motion control device 2, a power train system 6, a brake system 7, and a steering system 8. The vehicle motion control device 2 includes an operation management unit 3, an travel trajectory planning unit 4 and a travel control unit 5.

The extra-vehicle communication device 11 executes vehicle-to-vehicle communications between a subject vehicle and other vehicles or road-to-vehicle communications between the subject vehicle and roadside units to transmit and receive information about the vehicles, surrounding environment, etc. and cloud information.

The GNSS 12 receives electric waves transmitted from artificial satellites such as quasi-zenith satellites and GPS (Global Navigation Satellite System) satellites to acquire information such as a position of the subject vehicle.

The map information storage unit 13 stores general road information used in a navigation system etc., road information having information relating to curves, such as widths and curvatures of roads, information such as road conditions and traffic conditions, and information such as vehicles and surrounding environment indicating information about travel conditions of other vehicles. Note that the information relating to vehicles and surrounding environment and the cloud information are sequentially updated by information acquired via the extra-vehicle communication device 11 through the vehicle-to-vehicle communications and the road-to-vehicle communications.

The sensor 14 is, for example, an external sensor that detects information about vehicles, surrounding environment, etc., such as an image sensor, a millimeter-wave radar, or a LiDAR, and is a sensor that detects information such as manipulation of a driver, a speed, acceleration, jerk, angular speed of a vehicle, and a steering angle of a wheel. In the sensor 14, information about the vehicles, surrounding environment, etc. detected by the external sensor includes, for example, information about various objects such as obstacles, signs, lane boundary lines, outer lane lines, buildings, pedestrians, and other vehicles around the subject vehicle. In addition, the sensor 14 recognizes lane boundary lines, outer lane lines, etc. on the basis of difference between a white line and a road surface luminance in image data captured by the image sensor, for example.

The HMI unit 15 display information required by a user on a display from among information received through input manipulation of the user, such as selection of a travel mode and setting of a destination, information acquired from the extra-vehicle communication device 11, the GNSS 12, and the sensor 14, and information recorded on the map information storage unit 13, and performs audio guidance from a speaker. In addition, the HMI unit 15 issues an alert to the user.

The vehicle motion control device 2 has a calculation unit such as a CPU (Central Processing Unit), a main storage unit and an auxiliary storage unit such as a semiconductor memory, and hardware such as a communication device, and is an ECU (Electric Control Unit) that totally controls a vehicle to achieve various functions of the operation management unit 3 etc. by executing a program loaded to the main storage unit in the calculation unit. Note that, in the present embodiment, for convenience of explanation, the operation management unit 3, the travel trajectory planning unit 4, and the travel control unit 5 are configured separately, but not necessarily needed to be configured separately. When these units are used for an actual vehicle, various functions of these units may be achieved by an upper controller.

The travel modes of the vehicle controlled by the vehicle motion control device 2 include, for example, a comfort mode, an economy mode, a sport mode, and a shortest time mode for minimizing a travel time, and a shortest distance mode for minimizing a travel distance. Such travel modes are optionally set by the user, preset by the user, or set by the operation management unit 3 on the basis of travel condition information. Therefore, the vehicle motion control device 2 sets a speed, acceleration, and jerk of the subject vehicle, a speed and distance relative to a preceding vehicle traveling ahead of the subject vehicle, etc.

The operation management unit 3 generates on the basis of information acquired from the extra-vehicle communication device 11, the GNSS 12, and the sensor 14 and map information recorded on the map information storage unit 13, position information about the subject vehicle, information about various objects around the subject vehicle (information such as positions and speeds of vehicles and surrounding environment), and information relating to behavior of the vehicle, such as a longitudinal acceleration, longitudinal jerk, lateral acceleration, yaw rate, and lateral jerk.

In addition, the operation management unit 3 transmits the generated position information about the subject vehicle, information about the various objects, and information relating to behavior of the vehicle to other vehicles and roadside units via the extra-vehicle communication device 11 and simultaneously to the map information storage unit 13. The map information storage unit 13 sequentially updates map information to be stored by using the acquired position information about the subject vehicle, information about the various objects, and information relating to the behavior of the vehicle.

Further, the operation management unit 3 sets information about a route from a current position to destination of the vehicle on the basis of these pieces of information about the position of the subject vehicle, the information about the various objects, and information relating to the behavior of the vehicle and the information acquired by the HMI unit 15 (for example, the travel mode or destination). The information about this route is displayed on an after-mentioned map, and used to determine a travel trajectory of the vehicle. The information generated and set by the operation management unit 3 is explained as travel condition information.

The travel control unit 5 sets a target drive force, target braking force, target steering angle, etc. to allow the vehicle to travel along the travel trajectory outputted from the travel trajectory planning unit 4, and controls the power train system 6, the brake system 7, and the steering system 8.

The power train system 6 controls the drive force generated by an internal combustion engine, an electric motor, etc. on the basis of the manipulation of the driver and the target drive force outputted from the travel control unit 5.

The brake system 7 controls the braking force generated by a brake caliper etc. on the basis of the manipulation of the driver and the target braking force outputted from the travel control unit 5.

The steering system 8 controls the steering angle of the wheel on the basis of the manipulation of the driver and the target steering angle outputted from the travel control unit 5.

### (Fig. 2)

The travel trajectory planning unit 4 includes a first information acquisition unit 41, a second information acquisition unit 42, a limit value setting unit 43, a trajectory planning unit 44 and an information output unit 45. The first information acquisition unit 41 and second information acquisition unit 42 acquire the plurality of pieces of environment information relating to surrounding environment of the subject vehicle. The limit value setting unit 43 calculates the plurality of limit values for physical quantities relating to motion of the subject vehicle on the basis of the plurality of pieces of environment information acquired by the second information acquisition unit 42, and sets, on an after-mentioned map, a final limit value calculated on the basis of the plurality of limit values. The trajectory planning unit 44 generates a travel trajectory of the subject vehicle on the basis of the final limit value that is set on the map, and outputs information about the travel trajectory to the travel control unit 5 via the information output unit 45.

The first information acquisition unit 41 acquires, for example, subject vehicle information such as a mass and size of the subject vehicle and a travelable area that is information about an area where travel is possible without a collision against a structure such as a curbstone and traffic light on a course of the subject vehicle.

The second information acquisition unit 42 acquires, for example, obstacle information including sizes and positions of obstacles such as other vehicles and pedestrians around the subject vehicle, surrounding environment information including road conditions and positions such as friction coefficients and gradients of road surfaces around the subject vehicle, and information relating to a limit value of the subject vehicle that is set by an occupant of the subject vehicle or is preset. The user setting value, which is information relating to the limit value of the vehicle that is set by the occupant of the subject vehicle, is at least a fixed value.

Note that as the information acquisition unit of the travel trajectory planning unit 4, only a single information acquisition unit may be provided instead of two units of the first information acquisition unit 41 and second information acquisition unit 42. In addition, the information acquired by the second information acquisition unit 42 may contain information such as a magnitude of a mass, arrangement, and permissible physical quantity of occupants and cargos on the subject vehicle.

### (Fig. 3)

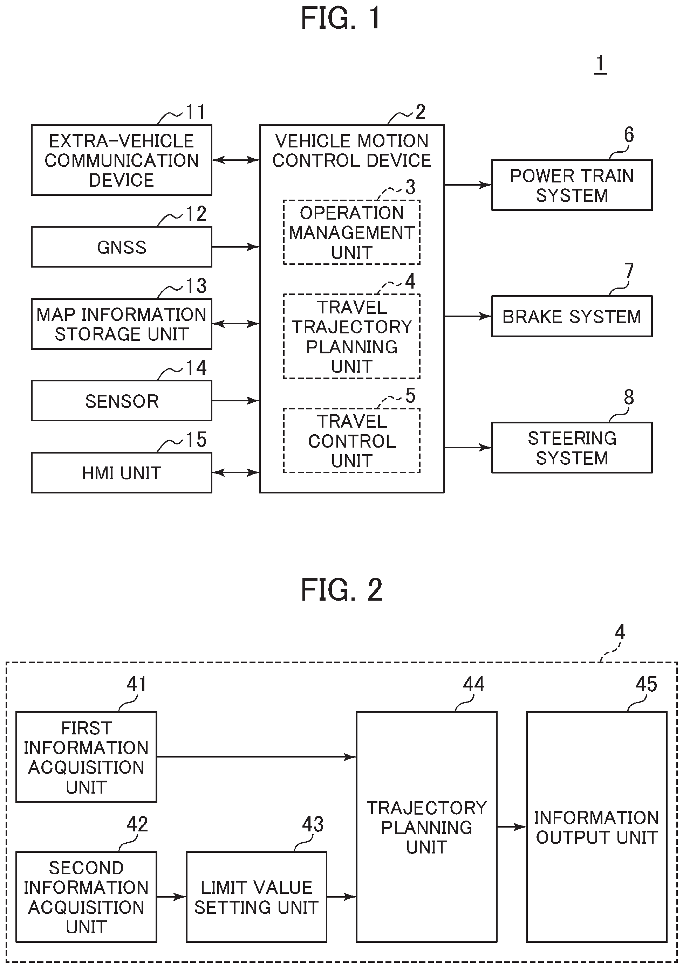

Processing of the travel trajectory planning unit 4 is explained using the functional block diagrams of FIG. 1 and FIG. 2. At Step S1, the first information acquisition unit 41 and second information acquisition unit 42 of the travel trajectory planning unit 4 acquire travel condition information from the operation management unit 3.

Next, at Step S2, the limit value setting unit 43 of the travel trajectory planning unit 4 sets limit values for physical quantities of the vehicle motion generated when the vehicle travels on a road on the basis of the travel condition information acquired by the second information acquisition unit 42 at Step S1.

Next, at Step S3, the trajectory planning unit 44 of the travel trajectory planning unit 4 calculates and generates a route that is a travel target when the vehicle travels on a road and a travel trajectory consisting of a speed and acceleration that are travel targets when the vehicle travels on a road on the basis of the travel condition information acquired by the first information acquisition unit 41 at Step S1 and the limit value that is set by the limit value setting unit 43 at Step S2.

Finally, at Step S4, the information output unit 45 of the travel trajectory planning unit 4 outputs the travel trajectory generated by the trajectory planning unit 44 at Step S3 to the travel control unit 5.

### (Fig. 4A)

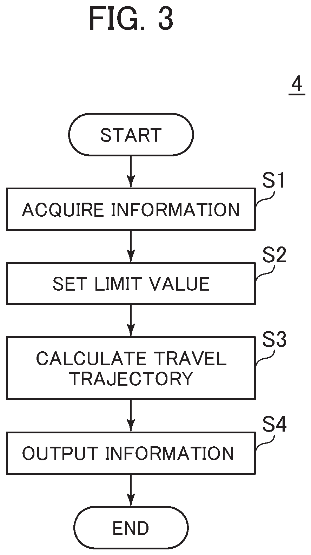

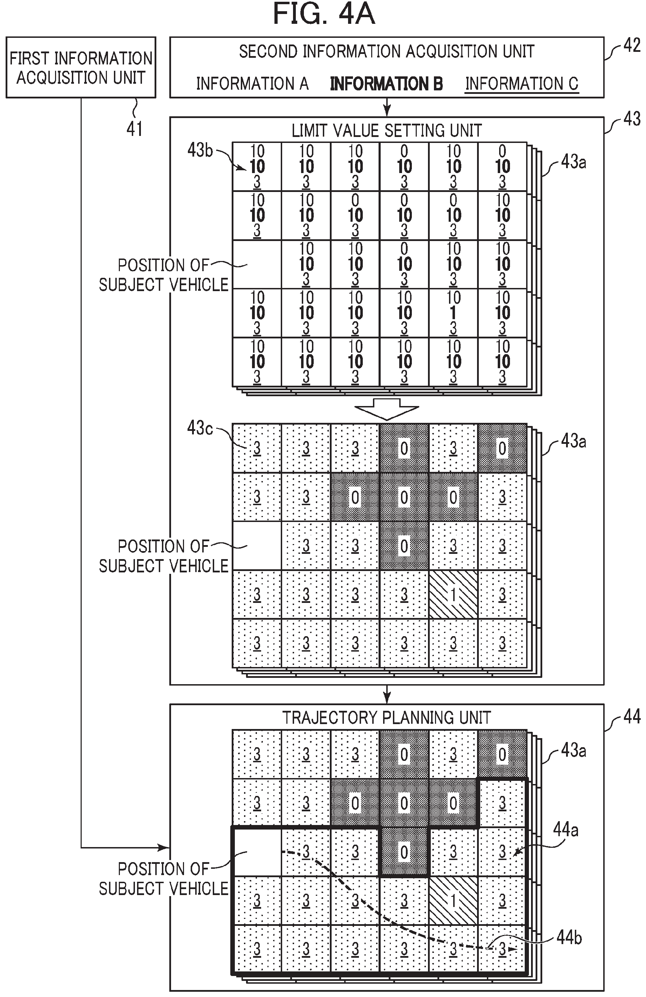

The limit value that is set by the limit value setting unit 43 in a situation of traveling on a road having risks such as an obstacle and a location having a low friction coefficient of a road surface (hereinafter called a "low µ road") and the travel trajectory generated by the trajectory planning unit 44 to avoid those risks on the basis of the set limit value are explained. Note that processing shown in the following FIG. 4A to FIG. 4C is one example of the processing of Step S1 to Step S3 of FIG. 3.

The second information acquisition unit 42 acquires information A relating to an obstacle, information B relating to a friction coefficient of a road surface, and information C relating to a limit value of the subject vehicle that is set by the occupant of the subject vehicle.

Next, the limit value setting unit 43 sets, at each point of squares on a grid map 43a, each limit value 43b calculated on the basis of the information A, the information B, and the information C acquired by the second information acquisition unit 42. Note that the grid map is a map consisting of squares, and by dividing a space into individual squares separated by equally spaced vertical and horizontal lines, the limit value 43b is set at the point of each divided square.

The shown numeral values of the respective limit values 43b set at each point on the grid map 43a illustrate, from the top to bottom, a limit value based on the information A, a limit value based on the information B (shown in bold), and a limit value based on the information C (shown with being underlined).

The limit values 43b include, as limit values relating to physical quantities of the vehicle motion, a speed, an acceleration and jerk in the longitudinal direction of the subject vehicle, and an acceleration and jerk in the lateral direction of the subject vehicle. The plurality of grid maps 43a may be provided for each value. In addition, the limit value setting unit 43 may set the limit values separately in the longitudinal direction and lateral direction of the subject vehicle or may set the limit values on the basis of the magnitude of the square root of the sum of the squares of the values in longitudinal direction and lateral direction.

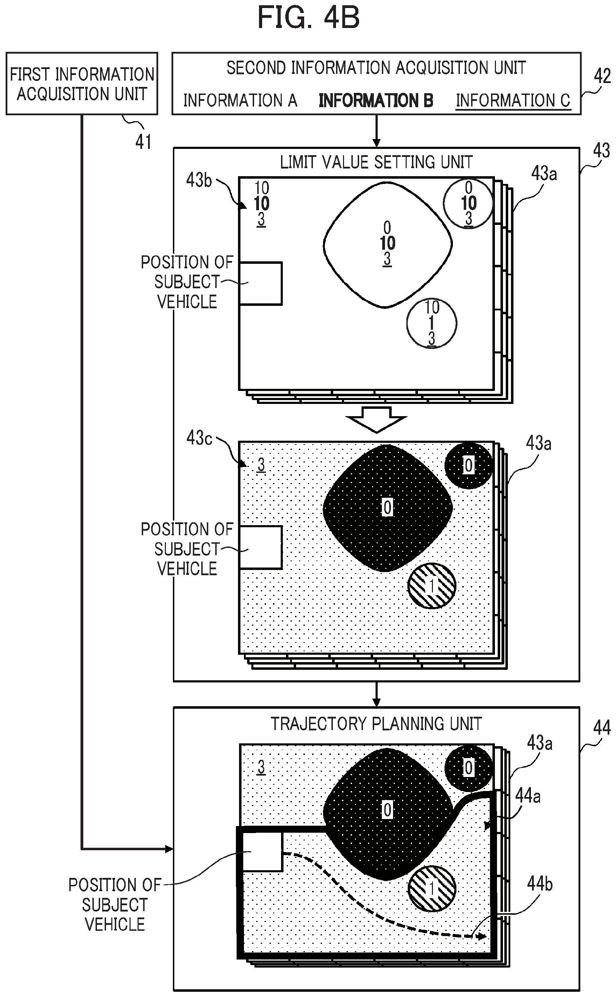

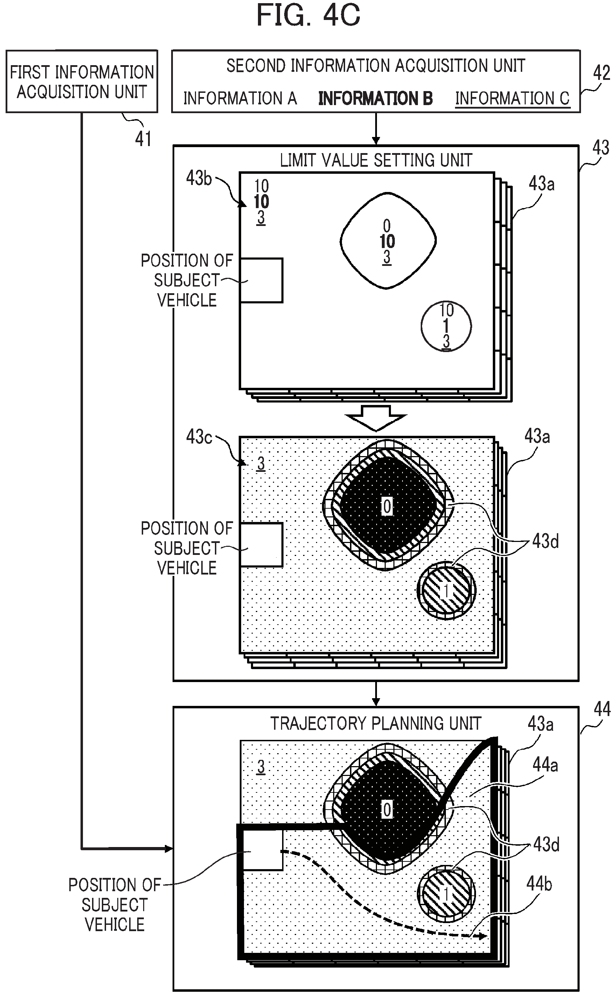

In addition to this method, the method of extracting each limit value 43b set at each point on the grid map 43a may extract a sum of the plurality of calculated limit values multiplied by a wight coefficient or a value based on the limit values and information around a predetermined point. In addition, each limit value 43b set at each point may be, for example, the plurality of limit values having information about a priority responsive to surrounding environment at a predetermined point. These calculation methods are common also to after-mentioned FIG. 4B and FIG. 4C.

The limit value setting unit 43 extracts and sets, at each point as the final limit value, a minimum limit value 43c, which is the smallest value of the limit values 43b set on the grid map 43a and respectively based on the information A, information B, and information C.

The trajectory planning unit 44 determines a travelable area 44a starting from the square (grid) of the subject vehicle on the grid map 43a on the basis of the subject vehicle information and travelable area information acquired by the first information acquisition unit 41 and the final limit values that are set by the limit value setting unit 43, and generates a travel trajectory 44b, which is a trajectory where the subject vehicle is travelable rightward in the traveling direction on the grid map 43a. The travel trajectory 44b is formed to avoid the squares having smaller limit values in the minimum limit values 43c at the respective points on the grid map 43a.

In this way, by setting the limit values 43b at the predetermined points on the map 43a on the basis of the plurality of calculated limit values 43b and by setting the limit value 43c smaller at the point where the limit value 43b is closer to a risk on the map 43a, the limit value setting unit 43 is capable of generating the safety travel trajectory 44b passing through the points having the high limit values 43c.

### (First Modification)

### (Fig. 4B)

Processing example of FIG. 4B, which is another processing different from that of FIG. 4A, is explained. Instead of using the grid used for the map of FIG. 4A, the limit values 43b are set to target risks such as an obstacle on a road and a location where a friction coefficient of a road surface is low. Note that the information acquired by the second information acquisition unit 42 of FIG. 4B is common to FIG. 4A.

The limit value setting unit 43 sets the limit values 43b based on the information A, the information B, and the information C acquired by the second information acquisition unit 42 and a size of a target obstacle, a low µ road, etc. at each point on the map 43a. The following processing including relationship between each numeral value described at each point on the map 43a and the information acquired by the second information acquisition unit 42 is common to FIG. 4A. By generating the travel trajectory 44b with this method, setting and extraction of the limit values at the points where setting is unnecessary become unnecessary. Thus, the calculation cost is reduceable.

### (Second Modification)

### (Fig. 4C)

The processing examples of FIG. 4B and 4B, which are another processing different from that of FIG. 4A, is explained. Note that the information acquired by the second information acquisition unit 42 is common to FIG. 4A and FIG. 4B. In addition, the following processing including relationship between each numeral value described at each point on the map 43a and the information acquired by the second information acquisition unit 42 is common to FIG. 4A and FIG. 4B.

In FIG. 4C, in common with FIG. 4B, the limit values 43b are set on the basis of risks such as a size of a target obstacle and a low µ road and then, when the final limit value 43c is set and reflected on the map 43a, a contoured range 43d is generated. In this contoured range 43d, the limit value becomes larger farther from a risk target to which the limit value is to be set, and the limit value is set smaller closer to the risk target. Therefore, since a more precise risk range than FIG. 4B is capable of being reflected on the map 43a, and the travelable area 44a formed excessively far from the risks is not formed, the travel trajectory 44b having high safety and high comfort where the speed does not decrease easily is capable of being generated.

Note that the following processing may be also executed in common with FIG. 4A to FIG. 4C. For example, the limit value setting unit 43 may set the limit value 43b at a predetermined point on the basis of the information around the predetermined point.

In addition, the limit value setting unit 43 may set the limit value 43b on the map on the basis of, for example, the magnitude of the mass, arrangement, and permissible physical quantity of occupants and cargos on the subject vehicle acquired by the second information acquisition unit 42 and a risk value calculated from a limit of a physical quantity for a motion capability of the subject vehicle and from a risk target, which is a factor that may impede travel of the subject vehicle. The risk value calculated at this time is a value based on the factor that may impede travel of the subject vehicle.

In addition, the limit value setting unit 43 may set the final limit value 43c on the basis of the plurality of limit values 43b calculated in response to the plurality of pieces of environment information acquired by the information acquisition unit 42 and the previously set limit value. The previously set limit value calculated at this time is a value that is set in the same situation or at the same location as the plurality of calculated limit values 43c.

In this way, in consideration of the risks such as obstacles and low µ roads, by setting limit values equal to or below the limit values for appropriate magnitudes of a speed, acceleration, and jerk at a predetermined point, and by setting the travel trajectory 44b generated based on the set limit values as the travel trajectory of the subject vehicle, the physical quantities for the vehicle motion of the subject vehicle fall within the limit values while suppressing the risk of approaching the obstacles, low µ roads, etc. This contributes to ride comfort for the occupants.

### (Second Embodiment)

### (Fig. 5)

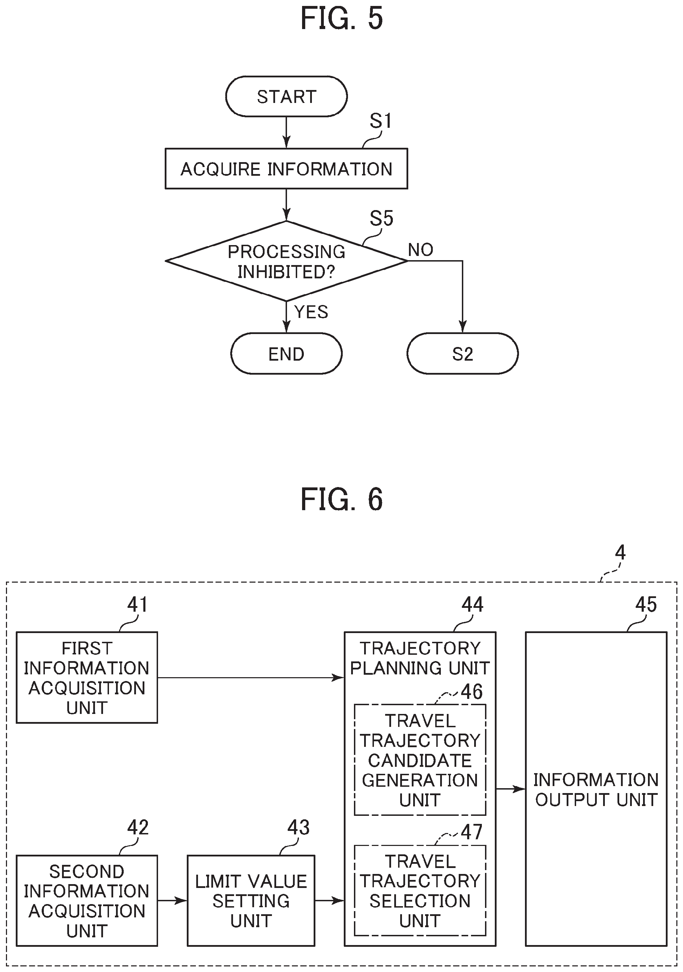

In the flowchart of the travel trajectory planning unit 4 shown in FIG. 5, Step S5 is newly added between Step S1 and Step S2 of the flowchart shown in FIG. 3.

At Step S5, the travel trajectory planning unit 4 determines whether to calculate a travel trajectory, for example, on the basis of a flag generated by the upper controller than the travel trajectory planning unit 4, such as the operation management unit 3. When the flag indicates prohibition of processing (YES), the processing ends, and the travel trajectory is not generated. In contrast, when the flag indicates permission of processing (NO), the processing subsequent to Step S2 shown in FIG. 3 is performed to set a desired limit value and to generate a travel trajectory.

In this way, the trajectory planning unit 44 generates a target trajectory when the flag outputted from the upper controller indicates permission of processing, and does not generate a target trajectory when the flag indicates prohibition of processing. For example, when the control device detects abnormality of the sensor and system, the generating processing of the travel trajectory prioritizing relief and comfort is prohibited. Then, transition to the vehicle motion control prioritizing avoidance capability is made to avoid collision with an obstacle etc. and to improve safety.

### (Third Embodiment)

### (Fig. 6)

In the travel trajectory planning unit 4, the trajectory planning unit 44 has a travel trajectory candidate generation unit 46 and a travel trajectory selection unit 47 in addition to the function unit block shown in FIG. 2. The travel trajectory candidate generation unit 46 generates a plurality of travel trajectory candidates in which physical quantities relating to vehicle motion of the subject vehicle generated when the subject vehicle travels fall within the limit values, and outputs the generated the plurality of travel trajectory candidates to the travel trajectory selection unit 47 on the basis of the travel condition information and limit values acquired by the trajectory planning unit 44.

The travel trajectory selection unit 47 selects one travel trajectory, and outputs the selected one travel trajectory to the information output unit 45 on the basis of a current travel mode (a shortest time mode, an economy mode, etc.) indicated by the travel condition information acquired from the first information acquisition unit 41 and the plurality of travel trajectory candidates acquired from the travel trajectory candidate generation unit 46.

### (Fig. 7)

The trajectory planning unit 44 generates a first travel trajectory candidate 44c shown by the broken line and a second travel trajectory candidate 44d shown by the dash-dotted line in the travel trajectory candidate generation unit 46. Since the first travel trajectory candidate 44c passes through the points where the final limit value 43c is low, the vehicle speed needs to be decreased. Since the first travel trajectory candidate 44c is a travel trajectory traveling straight from the subject vehicle position, no lateral acceleration generates, and the ride comfort is further improved than on a travel trajectory requiring a turn. In contrast, the ride comfort on the second travel trajectory candidate 44d, which requires a turn, may be decreased. The second travel trajectory candidate 44d is a trajectory passing through the points where the final limit value 43c is the largest, the safety thereof is improved.

For example, when the acquired travel condition information indicates a mode prioritizing ride comfort (comfortability), the trajectory planning unit 44 selects the first travel trajectory candidate 44c in the travel trajectory selection unit 47 (FIG. 6) from among the plurality of travel trajectory candidates generated by the travel trajectory candidate generation unit 46 (FIG. 6). In contrast, when the travel condition information indicates a mode prioritizing safety, the trajectory planning unit 44 selects the second travel trajectory candidate 44d in the travel trajectory selection unit 47 from among the plurality of travel trajectory candidates generated by the travel trajectory candidate generation unit 46.

In this way, the trajectory planning unit 44 generates the plurality of travel trajectory candidates, and selects an appropriate travel mode of the subject vehicle from among the generated the plurality of candidates on the basis of the travel mode outputted from the upper controller or the priority of the limit values. Thus, the same advantageous effect as First Embodiment and Second Embodiment is obtainable, and additionally, the vehicle motion is controllable in response to selection of the travel mode. Note that the limit value setting unit 43 may set the limit value 43b on the map on the basis of the magnitude of the risk value for the subject vehicle, the risk value changing in response to the travel condition of the subject vehicle.

Embodiments of the present invention explained above provide the following advantageous effects.
(1) The information acquisition units 41, 42 that acquire the plurality of pieces of environment information relating to surrounding environment of the subject vehicle, the limit value setting unit 43 that calculates the plurality of limit values 43b for physical quantities relating to motion of the subject vehicle on the basis of the plurality of pieces of environment information, and sets the final limit value 43c determined based on a plurality of limit values 43b, and the trajectory planning unit 44 that generates a travel trajectory of the subject vehicle on the basis of the final limit value 43c are provided. In this way, the vehicle motion control device 2 capable of achieving generation of a trajectory plan on the basis of the plurality of limit values calculated based on the environment information for traveling and the travel information about the subject vehicle can be provided.
(2) The limit value setting unit 43 sets one limit value of the plurality of calculated limit values 43b on the map 43a as the final limit value 43c. This contributes to the generation of the travelable area 44a and the travel trajectory 44b that provide high safety.
(3) The limit value setting unit 43 sets the limit value having priority information at a predetermined point on the basis of the limit values responsive to the plurality of pieces of environment information acquired from the information acquisition unit 42. This contributes to the generation of the travelable area 44a and the travel trajectory 44b that provide high safety.
(4) The limit value setting unit 43 sets the final limit value 43c at a predetermined point on the map 43a on the basis of the plurality of calculated limit values 43b. This contributes to the generation of the travelable area 44a and the travel trajectory 44b that provide high safety.
(5) The limit value setting unit 43 sets the limit value 43b at a predetermined point on the basis of the information around the predetermined point. This contributes to the generation of the travelable area 44a and the travel trajectory 44b that provide high safety.
(6) The limit value setting unit 43 sets the limit value 43c on the map on the basis of the magnitude of the risk value for the subject vehicle, the risk value changing in response to the travel condition of the subject vehicle. This contributes to the generation of the travel trajectory 44b achieving both safety and comfortability.
(7) The limit value setting unit 43 calculates the sum of the values acquired by multiplying the plurality of calculated limit values 43b by a weighting factor or the minimum limit value 43c, which is the minimum value of the plurality of calculated limit values 43b. The trajectory planning unit 44 generates the travel trajectory 44b of the subject vehicle on the basis of the sum of the values or the minimum limit value 43c. This contributes to the generation of the travelable area 44a and travel trajectory 44b that provide high safety.
(8) The limit value 43b is a value including accelerations and jerks on the acceleration side and deceleration side in the longitudinal direction of the subject vehicle and an acceleration and jerk in the lateral direction of the subject vehicle. This contributes to the generation of the travelable area 44a and travel trajectory 44b that provide high safety.
(9) The limit value setting unit 43 sets limit values separately in the longitudinal and lateral directions of the subject vehicle, or sets the limit value 43b based on the magnitude of the square root of the sum of the squares of the values in the longitudinal direction and lateral direction. This contributes to the generation of the travelable area 44a and travel trajectory 44b that provide high safety.
(10) The limit value setting unit 43 sets the limit values 43b on the basis of the magnitude of the mass, arrangement, and permissible physical quantity of the occupants and cargos on the subject vehicle and a risk value indicating a limit of a physical quantity relating to the motion performance of the subject vehicle and a risk on the subject vehicle. This contributes to the generation of the travel trajectory 44b achieving both safety and comfortability.
(11) The risk value is a value based on a factor that may impede travel of the subject vehicle. This contributes to the generation of the travel trajectory 44b achieving both safety and comfortability.
(12) The plurality of limit values 43b include a user setting value set by an occupant on the subject vehicle. The user setting value is at least a fixed value. This enables easier generation of the travel trajectory 44b achieving both safety and comfortability.
(13) The limit value setting unit 43 sets the limit value 43b to a smaller value as the limit value 43b is closer to a risk on the map 43a. This enables easier generation of the travel trajectory 44b achieving both safety and comfortability.
(14) The limit value setting unit 43 sets the final limit value 43c on the basis of the plurality of calculated limit values 43b and the previously set limit value 43b. This enables easier generation of the travel trajectory 44b achieving both safety and comfortability.
(15) The previously set limit value is a value that is set in the same situation or at the same location as the plurality of calculated limit values 43b. This enables easier generation of the travel trajectory 44b achieving both safety and comfortability.
(16) The trajectory planning unit 44 generates the travel trajectory 44b when the flag outputted from the upper controller indicates permission of processing, and does not generate the travel trajectory 44b when the flag indicates prohibition of processing. In this way, it is possible to determine whether to generate a travel trajectory in response to detection of abnormality by the sensor or system, and to contribute to execution of safety travel control prioritizing avoidance capability.
(17) The trajectory planning unit 44 generates the plurality of travel trajectory candidates, and selects the travel trajectory 44c (44d) from among the plurality of travel trajectory candidates on the basis of the travel mode outputted from the upper controller or the priority of the limit value. In this way, it is possible to generate the travel trajectory 44b achieving both safety and comfortability in response to the selected travel mode.

Note that the present invention is not limited to the above-described embodiments, and various modifications and combinations of other configurations are achievable without departing from the spirit of the invention. In addition, the present invention is not limited to those having all the configurations described in the above-described embodiments, and includes those in which some of the configurations have been deleted, those in which some of other configurations have been added, and those in which replacement with some of other configurations has been made.

### List of Reference Signs

1: in-vehicle system
2: vehicle motion control device
3: operation management unit
4: trajectory planning unit
5: travel control unit
6: power train system
7: brake system
8: steering system
11: extra-vehicle communication device
12: GNSS
13: map information storage unit
14: sensor
15: HMI unit
41: first information acquisition unit
42: second information acquisition unit
43: limit value setting unit
43a: map
43b: limit value
43c: minimum limit value (final limit value)
43d: contoured range
44: trajectory planning unit
44a: travelable area
44b: travel trajectory
44c: first travel trajectory candidate
44d: second travel trajectory candidate
45: information output unit
46: trajectory candidate generation unit
47: travel trajectory selection unit

## Claims

1. A vehicle motion control device comprising:
an information acquisition unit that acquires a plurality of pieces of environment information relating to surrounding environment of a subject vehicle;
a limit value setting unit that calculates a plurality of limit values for physical quantities relating to motion of the subject vehicle on a basis of the plurality of pieces of environment information, and sets a final limit value determined on a basis of the plurality of limit values on a map; and
a trajectory planning unit that generates a travel trajectory of the subject vehicle on a basis of the final limit value.

2. The vehicle motion control device according to claim 1 wherein
the limit value setting unit sets the one limit value of the calculated plurality of limit values on the map as the final limit value.

3. The vehicle motion control device according to claim 1 wherein
the limit value setting unit sets a limit value having information about a priority at a predetermined point on a basis of the limit value responsive to the plurality of environment information acquired from the information acquisition unit.

4. The vehicle motion control device according to claim 1 wherein
the limit value setting unit sets the final limit value at a predetermined point on the map on a basis of the calculated plurality of limit values.

5. The vehicle motion control device according to claim 4 wherein
the limit value setting unit sets the limit value on the predetermined point on a basis of information around the predetermined point.

6. The vehicle motion control device according to claim 1 wherein
the limit value setting unit sets the limit value on the map on a basis of a magnitude of a risk value for the subject vehicle, the risk value changing in response to a travel condition of the subject value.

7. The vehicle motion control device according to claim 1 wherein
the limit value setting unit calculates a sum of values obtained by multiplying the plurality of limit values by a weighting factor or a minimum limit value that is a minimum value of the calculated plurality of limit values, and
the trajectory planning unit generates a travel trajectory of the subject vehicle on a basis of the sum of the values or the minimum limit value.

8. The vehicle motion control device according to claim 1 wherein
the limit value is a value containing accelerations and jerks on an acceleration side and on a deceleration side in a longitudinal direction of the subject vehicle and an acceleration and jerk in a lateral direction of the subject vehicle.

9. The vehicle motion control device according to claim 1 wherein
the limit value setting unit sets the limit value separately in a longitudinal direction and lateral direction of the subject vehicle or sets the limit value on a basis of a magnitude of the square root of the sum of the squares of the values in the longitudinal direction and lateral direction.

10. The vehicle motion control device according to claim 1 wherein
the limit value setting unit sets the limit value on a basis of a magnitude of a mass, an arrangement, and a physical quantity of occupants and cargos on the subject vehicle and a risk value indicating a limit of a physical quantity for a motion capability of the subject vehicle and a risk on the subject vehicle.

11. The vehicle motion control device according to claim 10 wherein
the risk value is a value based on a factor that may impede travel of the subject vehicle.

12. The vehicle motion control device according to claim 1 wherein
the plurality of limit values include a user setting value that is set by an occupant of the subject vehicle, and
the user setting value is at least a fixed value.

13. The vehicle motion control device according to claim 1 wherein
the limit value setting unit sets the limit value as a smaller value as the limit value is closer to a risk on the map.

14. The vehicle motion control device according to claim 1 wherein
the limit value setting unit sets the final limit value on a basis of the plurality of calculated plurality of limit values and the previously set limit value.

15. The vehicle motion control device according to claim 14 wherein
the previously set limit value is a value that is set in a same condition or at a same location as the calculated plurality of limit values.

16. The vehicle motion control device according to claim 1 wherein
the trajectory planning unit generates the travel trajectory when a flag outputted from an upper controller indicates a processing permission, and does not generate the travel trajectory when the flag indicates a processing prohibition.

17. The vehicle motion control device according to claim 1 wherein
the trajectory planning unit generates a plurality of candidates for the travel trajectory, and selects the driving trajectory from the plurality of candidates for the travel trajectory on a basis of a travel mode outputted from an upper controller or a priority of the limit value.
